# EUROPEAN PATENT APPLICATION

(11) **EP 3 517 900 A1**
(43) Date of publication of application: **31.07.2019**
(21) Application number: 17907536.1
(22) Date of filing: 12.12.2017
(51) Int. Cl.: G01F 1/58

(54) **ELECTROMAGNETIC FLOWMETER**

(30) Priority: 28.04.2017 JP 2017089704; 28.04.2017 JP 2017089705; 28.04.2017 JP 2017089706; 28.04.2017 JP 2017089707; 28.04.2017 JP 2017089708; 28.04.2017 JP 2017089709; 28.04.2017 JP 2017089710; 28.04.2017 JP 2017089711
(71) Applicant: Aichi Tokei Denki Co., Ltd., Nagoya-shi, Aichi 456-8691 (JP)
(72) Inventor: KIMURA Koichi, Nagoya-shi Aichi 456-8691 (JP); ITO Hisao, Nagoya-shi Aichi 456-8691 (JP); SUZUKI Hideyuki, Nagoya-shi Aichi 456-8691 (JP); SAKAI Ryo, Nagoya-shi Aichi 456-8691 (JP)
(74) Representative: Kramer Barske Schmidtchen Patentanwälte PartG mbB
(86) International application number: PCT/JP2017/044594
(87) International publication number: WO 2018/198419

(57) **Abstract**

[Object] To provide an electromagnetic flowmeter with higher measurement precision than that of the conventional one.

[Solving Means] The electromagnetic flowmeter 10 of the present invention includes: a resin flow path housing 20; a pair of porous electrodes 51, 51 made of a porous conductor and embedded in the flow path housing 20; a pair of electrode opposing surfaces 51A, 51A provided to the pair of porous electrodes 51, 51; a pair of electrode accommodating holes 35, 35 extending from an outer face of the flow path housing 20 and connecting to the pair of porous electrodes 51, 51; a pair of solid electrodes 55, 55 accommodated in the pair of electrode accommodating holes 35, 35; porous-side connecting parts 53, 53 and solid-side connecting parts 56, 56 respectively formed in the porous electrodes 51, 51 and the solid electrodes 55, 55 to fit and electrically connect with each other; a pair of sensing electrodes 50, 50 formed of the pair of solid electrodes 55, 55 and the pair of porous electrodes 51, 51; and seal members 36 that seal gaps respectively between the solid electrodes 55, 55 and the electrode accommodating holes 35, 35.

## Description

### TECHNICAL FIELD

The present invention relates to an electromagnetic flowmeter that measures the flow rate of water.

### BACKGROUND ART

Recent years have found widespread use of electromagnetic flowmeters in place of turbine flow meters (for example, Patent Literature 1).

### RELATED ART DOCUMENTS

### PATENT DOCUMENTS

Patent Document 1: Japanese Unexamined Patent Application Publication No. JP-5-99715 A (FIG. 1)

### SUMMARY OF INVENTION

### PROBLEMS TO BE SOLVED BY THE INVENTION

For wider use of electromagnetic flowmeters, however, a higher measurement precision is desired.

In view of the circumstance noted above, an object of the present invention is to provide an electromagnetic flowmeter with higher measurement precision than that of the conventional one.

### MEANS FOR SOLVING THE PROBLEMS

An electromagnetic flowmeter according to one aspect of the present invention devised to achieve the object noted above includes: a resin flow path housing having a measurement flow path in which water flows under a magnetic field; a pair of porous electrodes made of a porous conductor, embedded in the flow path housing, and opposing each other in a direction intersecting the magnetic field; a pair of electrode opposing surfaces provided to the pair of porous electrodes such as to be exposed inside the measurement flow path and face each other; a pair of electrode accommodating holes extending from an outer face of the flow path housing and connecting to the pair of porous electrodes; a pair of solid electrodes accommodated in the pair of electrode accommodating holes; a porous-side connecting part and a solid-side connecting part respectively formed in each of the porous electrodes and each of the solid electrodes to fit and electrically connect with each other; a pair of sensing electrodes formed of the pair of solid electrodes and the pair of porous electrodes to detect a potential difference between two points inside the measurement flow path; and a seal member that seals a gap between each of the solid electrodes and each of the electrode accommodating holes.

### BRIEF DESCRIPTION OF DRAWINGS

FIG. 1 is a perspective view of an electromagnetic flowmeter according to a first embodiment of the present invention.
FIG. 2 is a backside cross-sectional view of a meter body.
FIG. 3 is a perspective view of a flow path housing.
FIG. 4 is a front cross-sectional view of the vicinity of a measurement part of the flow path housing.
FIG. 5 is a perspective cross-sectional view of a sensing electrode and its peripheral parts.
FIG. 6 is a top cross-sectional view of a sensing electrode and its peripheral parts according to a second embodiment.

### MODE FOR CARRYING OUT THE INVENTION

### (First embodiment)

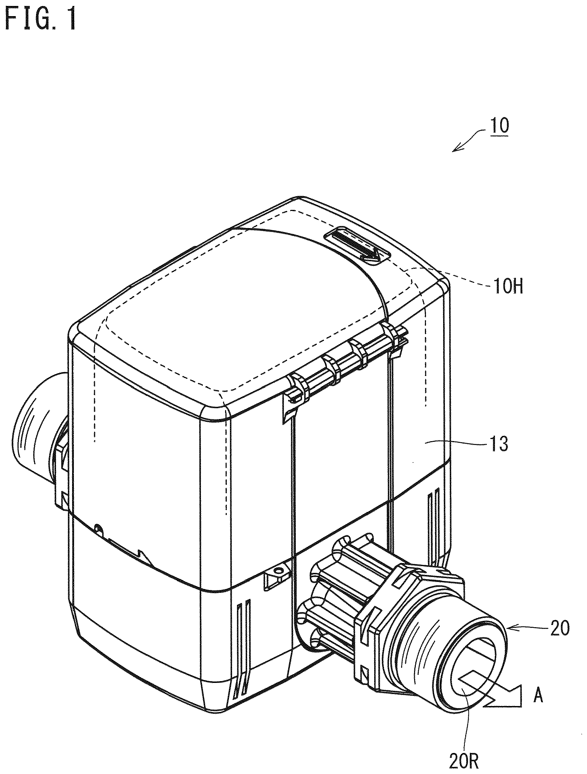

A first embodiment of the present invention will be hereinafter described with reference to FIG. 1 to FIG. 5. An electromagnetic flowmeter 10 of this embodiment shown in FIG. 1 is used as a water meter, for example. The electromagnetic flowmeter 10 of this embodiment includes a meter body 10H formed of a plurality of parts assembled to a middle part of a resin flow path housing 20 extending in a horizontal direction. The electromagnetic flowmeter 10 of this embodiment is configured such that its meter body 10H is accommodated in a rectangular parallelepiped case 13. The flow path housing 20 is connected to a midway point of a water pipe. The tap water flows from one end to the other end through a measurement flow path 20R that extends longitudinally through the flow path housing 20. In FIG. 1, FIG. 3, and FIG. 4, the flow direction of tap water is indicated by arrow A. The direction in which the flow path housing 20 extends is not limited to horizontal and it may be a direction intersecting the horizontal direction.

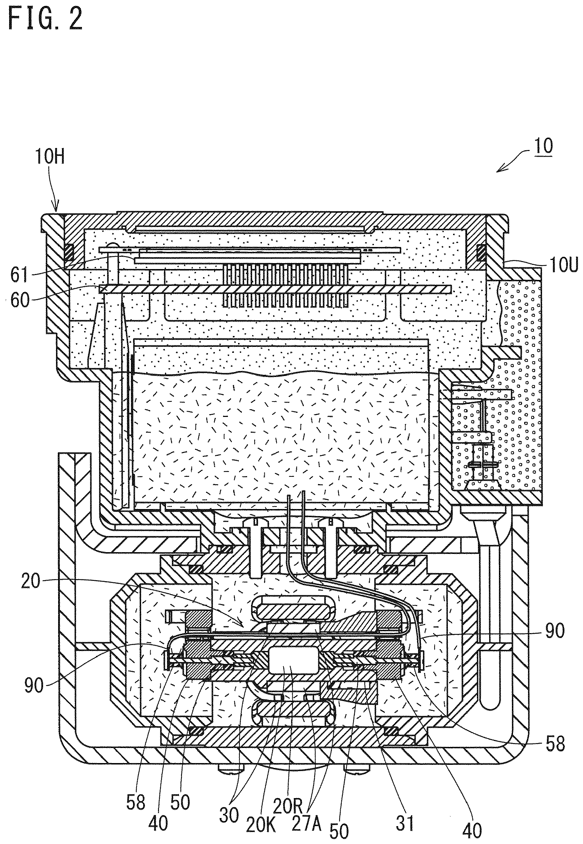

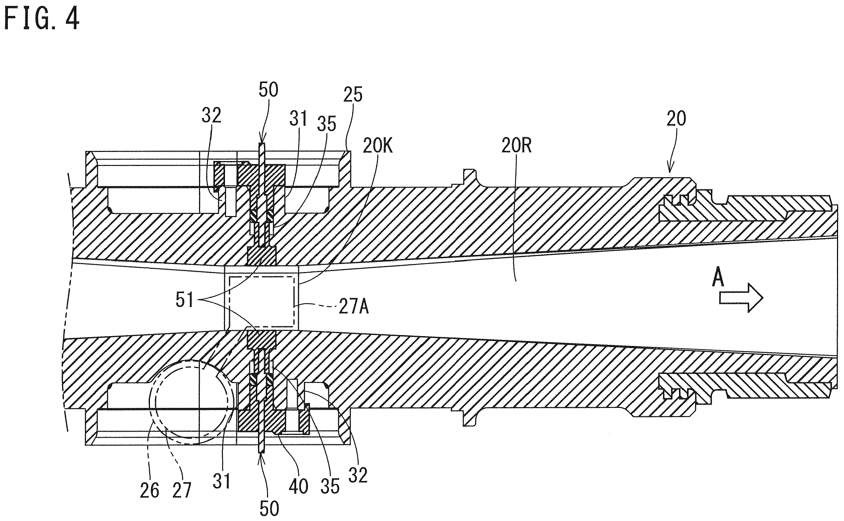

As shown in FIG. 4, the measurement flow path 20R is reduced gradually in diameter from both ends toward a central part. The measurement flow path 20R has a measurement part 20K slightly downstream relative to the center where the path is most constricted. The measurement part 20K has a horizontally long rectangular cross-sectional shape with rounded four corners as shown in FIG. 2, and extends over a predetermined length as shown in FIG. 4. The measurement flow path 20R has a circular cross section at both ends. The cross-sectional shape of the measurement flow path 20R transforms gradually from circular at both ends to rectangular at the measurement part 20K.

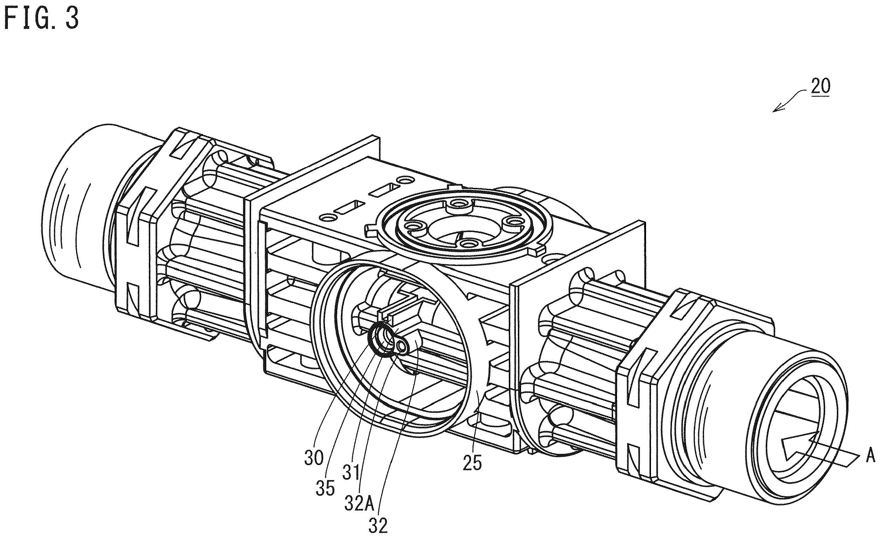

As shown in FIG. 3, an orthogonal cross sleeve 25 is provided at a central part in the longitudinal direction of the flow path housing 20 perpendicularly to the axial direction of the flow path housing 20. As shown in FIG. 4, the measurement part 20K mentioned above is positioned inside the orthogonal cross sleeve 25. On both sides of the measurement part 20K are provided a pair of electrode support protrusions 31, 31 and a pair of fixing protrusions 32, 32 projecting sideways from both side faces of the flow path housing 20. These electrode support protrusions 31 and fixing protrusions 32 are adjacent and integral with each other as shown in FIG. 3.

As shown in FIG. 2, parts accommodating spaces 30, 30 are formed above and below the measurement part 20K in the flow path housing 20. Further, as shown in FIG. 4, next to one of the electrode support protrusions 31 on the opposite side from the fixing protrusion 32, coils 26 are accommodated such that the winding axis is oriented along the up and down direction. A pair of yokes 27 (only one of the yokes 27 being shown in FIG. 4) joined to both ends of an iron core (not shown) of the coils 26 extend as far as to the parts accommodating spaces 30, 30. Flat plate-like ends 27A, 27Aof these yokes 27, 27 are arranged opposite to each other interposing the measurement part 20K of the measurement flow path 20R as shown in FIG. 2.

As shown in FIG. 4, a pair of porous electrodes 51, 51 are embedded on both sides of the measurement part 20K of the flow path housing 20 on extension lines of the electrode support protrusions 31, 31 mentioned above, and a pair of electrode accommodating holes 35, 35 are formed such as to extend from respective distal end faces of electrode support protrusions 31 as far as to the porous electrodes 51.

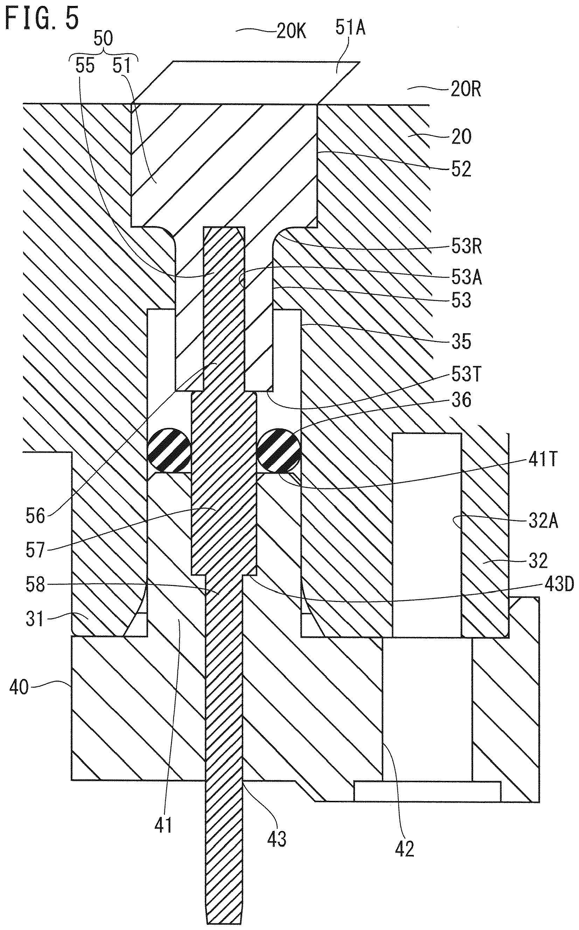

The porous electrode 51 is formed of a porous conductor (e.g., graphite) that has undergone a hydrophilic treatment. The porous electrode 51 is formed of a head part 52 and a porous-side connecting part 53, as shown in FIG. 5. The head part 52 is a rectangular parallelepiped and has one side face that is disposed to be flush with an inner face of the measurement flow path 20R and that forms an electrode opposing surface 51A. Although not shown, when viewed from the opposing directions of both porous electrodes 51, 51, the electrode opposing surface 51A is rectangular that is long along the axial direction of the measurement flow path 20R, and positioned at the center in the up and down direction of the measurement part 20K.

The porous-side connecting part 53 is cylindrical, for example, and protrudes from the center on the side face of the head part 52 on the opposite side from the electrode opposing surface 51A. A chamfered curved surface 53R is provided at the proximal end on the outer face of the porous-side connecting part 53.

The electrode accommodating hole 35 has a cross section that is concentric to and larger than the outside diameter of the porous-side connecting part 53. Part of the porous-side connecting part 53 from a middle position in the axial direction to the distal end protrudes from the center of the deep end surface of the electrode accommodating hole 35. This structure can allow the flow path housing 20 to be readily formed by insert-molding, with the distal end of the porous-side connecting part 53 being held in a mold (not shown).

A solid electrode 55 is accommodated in each electrode accommodating hole 35. The solid electrode 55 is made of stainless steel, for example, in the form of a rod as a whole. The solid electrode 55 has a middle large-diameter part 57 in a middle part where the diameter is increased stepwise. One side from this middle large-diameter part 57 to the distal end serves as a solid-side connecting part 56, while the opposite side serves as a wire connection part 58. The distal end of the solid-side connecting part 56 is tapered. The solid-side connecting part 56 is fitted in a fitting hole 53A of the porous-side connecting part 53 described above so that the solid electrode 55 and the porous electrode 51 are electrically connected to each other. A sensing electrode 50 is formed of the porous electrode 51 and the solid electrode 55 electrically connected to each other. As shown in FIG. 4, a pair of sensing electrodes 50, 50 are disposed on both sides of the measurement flow path 20R.

The solid-side connecting part 56 shown in FIG. 5 is slightly shorter than the porous-side connecting part 53. The distal end face of the middle large-diameter part 57 is abutted on a distal end face 53T of the porous-side connecting part 53. An O-ring 36 as a seal member is interposed between the middle large-diameter part 57 and an inner face of the electrode accommodating hole 35.

The O-ring 36 and the solid electrode 55 are retained by an electrode fixing member 40. The electrode fixing member 40 includes a fitting protrusion 41 abutted on distal end faces of the electrode support protrusion 31 and fixing protrusion 32 and fitted into the electrode accommodating hole 35, and a screw passage hole 42 matched in position with a mounting hole 32A formed in the fixing protrusion 32. A screw (not shown) passed through the screw passage hole 42 is threaded into the mounting hole 32A whereby the electrode fixing member 40 is fixed to the flow path housing 20. An electrode passage hole 43 extends through a central part of the fitting protrusion 41. The electrode passage hole 43 is increased in diameter stepwise from its midway point on the distal side of the fitting protrusion 41. The solid electrode 55 is passed through the electrode passage hole 43, with the proximal end face of the middle large-diameter part 57 abutting on a stepped surface 43D of the electrode passage hole 43, so that the solid electrode 55 is retained in the electrode accommodating hole 35. The O-ring 36 is in contact with a distal end face 41T of the fitting protrusion 41 and retained in the electrode accommodating hole 35, and restricted from moving further to the deep end of the electrode accommodating hole 35 by the distal end face 53T of the porous-side connecting part 53. The distal end face 41T of the fitting protrusion 41 is equivalent to an O-ring positioning part.

The wire connection part 58 of the solid electrode 55 penetrates the electrode fixing member 40 and extends out of the electrode accommodating hole 35. As shown in FIG. 2, a wire 90 is connected to the distal end of the wire connection part 58, extends to above the flow path housing 20, and is connected to a control substrate 60 inside a control unit 10U. A wire (not shown) from the coils 26 is similarly connected to the control substrate 60.

The structure of the electromagnetic flowmeter 10 of this embodiment has been described above. Next, the effects of this electromagnetic flowmeter 10 will be described. The electromagnetic flowmeter 10 is connected to a midway point of a water pipe to operate, to measure the flow rate of water flowing through the water pipe. For this purpose, the control substrate 60 supplies an alternating current to the coils 26 to provide alternating magnetic fields from both sides to the measurement part 20K of the measurement flow path 20R. When water flows through the measurement part 20K in this state, electromagnetic induction causes a potential difference to be induced between the electrode opposing surfaces 51A, 51A of the pair of sensing electrodes 50, 50 in accordance with the flow speed of water. The control substrate 60 calculates a flow rate of water per unit time based on this potential difference and a cross-sectional area or the like of the measurement part 20K, as well as obtains an integrated flow rate by integrating the flow rates. These calculation results are displayed on a monitor 61 above the control substrate 60.

Electrochemical double-layer capacitance at the boundary between the sensing electrode 50 and water is one of the factors that affect the measurement precision of the electromagnetic flowmeter 10. More specifically, the smaller the contact area between the sensing electrode 50 and water, the smaller the electrochemical double-layer capacitance, leading to a larger impedance between the pair of sensing electrodes 50, 50, which makes it harder for the current produced by electromagnetic induction to flow between the pair of sensing electrodes 50, 50 and makes the circuit susceptible to noise. In the electromagnetic flowmeter 10 of this embodiment, as described above, the pair of sensing electrodes 50, 50 are formed of the pair of porous electrodes 51, 51 made of a porous conductor, and a pair of solid electrodes 55, 55 electrically connected to these porous electrodes 51, 51. As the water impregnates the porous electrode 51 that is part of the sensing electrode 50, a large contact area is secured between the sensing electrode 50 and water. Thus, the electrochemical double-layer capacitance is increased and noise is suppressed, so that the measurement precision of the flow rate is improved.

While the pair of porous electrodes 51, 51 are embedded in the flow path housing 20, the pair of solid electrodes 55, 55 are accommodated in the pair of electrode accommodating holes 35, 35 formed in the flow path housing 20. The porous-side connecting part 53 of each porous electrode 51 and the solid-side connecting part 56 of each solid electrode 55 are fitted with each other inside the electrode accommodating hole 35 and electrically connected to each other.

With this configuration, the pair of porous electrodes 51, 51 can be readily fixed to the flow path housing 20 by insert-molding of the flow path housing 20, and also, assembling of the pair of solid electrodes 55, 55 to the pair of electrode accommodating holes 35, 35, and assembling of the porous electrodes 51, 51 to the solid electrodes 55, 55 are made easy. Since the gaps between respective solid electrodes 55, 55 and electrode accommodating holes 35, 35 are sealed by the O-rings 36, the water that penetrates through the porous electrodes 51, 51 can easily be prevented from leaking out of the flow path housing 20. Furthermore, with a configuration wherein the O-rings 36 are interposed between outer surfaces of the solid electrodes 55, 55 and inner surfaces of the electrode accommodating holes 35, 35, the sealing process can be accomplished through the operation of fitting the solid electrodes 55, 55 into the electrode accommodating holes 35, 35.

The porous electrode 51 is configured such that the tubular porous-side connecting part 53 protrudes from part of the side face of the head part 52, with the head part 52 being covered by the resin forming the flow path housing 20 except for the electrode opposing surface 51A and the portion where the porous-side connecting part 53 protrudes, so that the section of the porous electrode 51 exposed on the side facing the electrode accommodating hole 35 is made small, and thus the water penetrating through the porous electrode 51 can be readily stopped by the O-ring 36 between the solid electrode 55 and each electrode accommodating hole 35.

The structure of the electromagnetic flowmeter 10 of this embodiment, wherein the porous-side connecting part 53 is cylindrical, and one end portion on the side facing the head part 52 is covered by the resin forming the flow path housing 20, allows the flow path housing 20 to be readily formed by insert-molding, with the distal end of the porous-side connecting part 53 being held in the mold.

In the electromagnetic flowmeter 10 of this embodiment, the O-ring 36 is interposed between the distal end face 41T of the fitting protrusion 41 serving as the O-ring positioning part and the porous-side connecting part 53 to determine the position of the O-ring 36 in the axial direction of the solid electrode 55. As the position of the O-ring 36 is determined by the porous-side connecting part 53, a stable seal is provided.

The electrode opposing surface 51A of the porous electrode 51 is flush with the inner face of the measurement flow path 20R so that creation of turbulences inside the measurement flow path 20R is prevented, which also contributes to a higher measurement precision. Further, not only the measurement flow path 20R has a quadrate cross-sectional shape, but also the electrode opposing surface 51A of the porous electrode 51 is quadrate, so that the electrode opposing surface 51A can be made wide, which also contributes to the improvement of measurement precision.

### (Second embodiment)

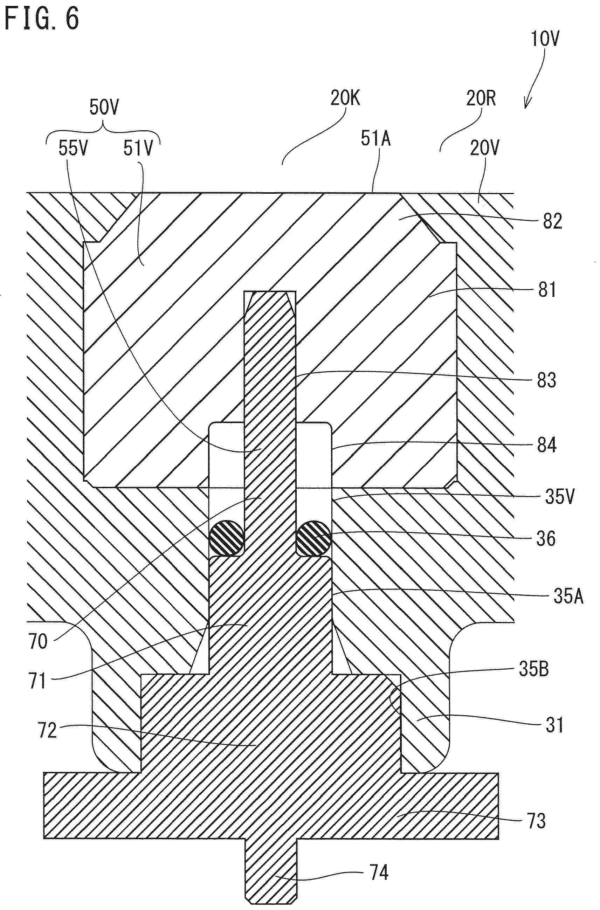

This embodiment is shown in FIG. 6 and different from the first embodiment in the structure of a sensing electrode 50V. A porous electrode 51V constituting part of the sensing electrode 50V of this embodiment is configured such that a truncated conical protrusion 82 projects from one side face of a rectangular parallelepiped main body 81, for example. The distal end face of the truncated conical protrusion 82 serves as an electrode opposing surface 51A and is made flush with an inner face of the measurement flow path 20R. The center of the surface of the main body 81 opposite from the truncated conical protrusion 82 is indented to form a circular recess 84, and a porous-side connecting part 83, which is a circular hole, is formed in the center at the bottom of this circular recess 84. The electrode accommodating hole 35V has one end formed as a small-diameter part 35A continuous with the circular recess 84, and the other end increased in diameter stepwise to serve as a large-diameter part 35B. This structure can allow the flow path housing 20V to be readily formed by insert-molding, with a distal end of a supporting protrusion in the mold (not shown) being fitted in the circular recess 84 of the porous electrode 51V.

The solid electrode 55V has a circular cross section, and includes a solid-side connecting part 70, a middle small-diameter part 71, a middle large-diameter part 72, a flange part 73, and a connecting protrusion 74 sequentially formed from the distal side. With the O-ring 36 fitted to the proximal end of the solid-side connecting part 70, the solid electrode 55V is inserted into the electrode accommodating hole 35V, the solid-side connecting part 70 first. The distal end of the solid-side connecting part 70 fits in the porous-side connecting part 83 of the porous electrode 51V, the middle small-diameter part 71 of the solid electrode 55V fits in the small-diameter part 35A of the electrode accommodating hole 35V, and the middle large-diameter part 72 of the solid electrode 55V fits in the large-diameter part 35B of the electrode accommodating hole 35V. A screw having passed through a through hole (not shown) in the flange part 73 is threaded into a mounting hole (not shown) of the flow path housing 20V, whereby the solid electrode 55V is fixed to the flow path housing 20V. Further, a wire (not shown) is soldered or brazed to the connecting protrusion 74.

According to the electromagnetic flowmeter 10V of this embodiment, in addition to the effects achieved by the electromagnetic flowmeter 10 of the first embodiment, the overall volume of the porous electrode 51V embedded in the flow path housing 20V is increased, while keeping the proportion of the size of the electrode opposing surface 51A relative to the measurement flow path 20R, because the porous electrode 51V is narrowed toward the electrode opposing surface 51A, whereby the contact area between the porous electrode 51V and water can be increased.

### (Other embodiments)

The present invention is not limited to the embodiment described above. For example, other embodiments as will be described below are also included in the technical scope of the present invention. In addition, various other changes can be made in carrying out the invention without departing from the scope of the invention.
(1) While the porous electrode 51 is made of graphite in the first embodiment described above, it may be made of other metals with a plurality of holes drilled therein, or of sintered metals.
(2) While the electromagnetic flowmeter 10 includes the O-ring 36 as a seal member in the first embodiment described above, the seal member may be a sealant that has been filled and hardened, or, a gasket may also be used as a seal member. Such a gasket and O-ring 36 may be held between the solid electrodes 55, 55 and the electrode accommodating holes 35, 35 in a direction in which the solid electrodes fit into the holes.
(3) In the first embodiment described above, the porous electrode 51 may be columnar, or polygonal columnar. A distal end portion of the porous electrode 51 may be protruded into the measurement flow path 20R.

### DESCRIPTION OF REFERENCE NUMERALS

- 10, 10V: Electromagnetic flowmeter
- 20, 20V: Flow path housing
- 35, 35V: Electrode accommodating hole
- 36: O-ring (seal member)
- 50, 50V: SENSING ELECTRODE
- 51: Porous electrode
- 51A: Electrode opposing surface
- 52: Head part
- 53, 83: Porous-side connecting part
- 55, 55V: Solid electrode
- 56, 70: Solid-side connecting part

## Claims

1. An electromagnetic flowmeter comprising:
a resin flow path housing having a measurement flow path in which water flows under a magnetic field;
a pair of porous electrodes made of a porous conductor, embedded in the flow path housing, and opposing each other in a direction intersecting the magnetic field;
a pair of electrode opposing surfaces provided in the pair of porous electrodes such as to be exposed inside the measurement flow path and face each other;
a pair of electrode accommodating holes extending from an outer face of the flow path housing and connecting to the pair of porous electrodes;
a pair of solid electrodes accommodated in the pair of electrode accommodating holes;
a porous-side connecting part and a solid-side connecting part respectively formed in each of the porous electrodes and each of the solid electrodes to fit and electrically connect with each other;
a pair of sensing electrodes formed of the pair of solid electrodes and the pair of porous electrodes to detect a potential difference between two points inside the measurement flow path; and
a seal member that seals a gap between each of the solid electrodes and each of the electrode accommodating holes.

2. The electromagnetic flowmeter according to claim 1,
further comprising an O-ring as the seal member, sandwiched between an outer surface of the solid electrode and an inner surface of the electrode accommodating hole.

3. The electromagnetic flowmeter according to claim 1, wherein each of the porous electrodes comprises a head part having one side face partly or entirely serving as the electrode opposing surface and other side faces than the electrode opposing surface, the other side faces, except for a portion thereof being covered with a resin that forms the flow path housing, and the porous-side connecting part in a tubular or bar-like shape protruding from the portion of the other side faces of the head part.

4. The electromagnetic flowmeter according to claim 3, wherein
the porous-side connecting part is cylindrical and has an end part on one side closer to the head part covered with the resin forming the flow path housing, and
the solid electrode has a bar-like shape with a circular cross section, with a distal end portion serving as the solid-side connecting part to be fitted to the porous-side connecting part.

5. The electromagnetic flowmeter according to claim 4, further comprising:
an O-ring as the seal member, sandwiched between an outer surface of an axially middle part of the solid electrode and an inner surface of the electrode accommodating hole, and
an O-ring positioning part that sets the O-ring in position by interposing the O-ring between the O-ring positioning part and the porous-side connecting part in an axial direction of the solid electrode.

6. The electromagnetic flowmeter according to any one of claims 1 to 5, wherein the pair of electrode opposing surfaces are flush with an inner face of the measurement flow path.

7. The electromagnetic flowmeter according to claim 6, wherein the porous electrodes are narrowed toward the electrode opposing surfaces and the electrode opposing surfaces only are exposed to the measurement flow path.

8. The electromagnetic flowmeter according to any one of claims 1 to 7, wherein
the measurement flow path has a quadrate cross-sectional shape in a section where the pair of porous electrodes are positioned, and
the pair of electrode opposing surfaces are quadrate.

9. The electromagnetic flowmeter according to any one of claims 1 to 8, wherein the porous electrodes are made of graphite.

10. The electromagnetic flowmeter according to claim 9, wherein the graphite is imparted with hydrophilicity.
